# EUROPEAN PATENT APPLICATION

(11) **EP 3 812 269 A1**
(43) Date of publication of application: **28.04.2021**
(21) Application number: 19205139.9
(22) Date of filing: 24.10.2019
(51) Int. Cl.: B64C 27/51, F16F 9/10, F16F 9/36

(54) **DAMPER ASSEMBLY**

(71) Applicant: Microtecnica S.r.l., 10126 Turin (IT)
(72) Inventor: MEZZINO, Giacomo, 10127 Torino (IT); MOLINELLI, Dario, 20866 Carnate (Monza e Brianza) (IT); MAINO, Franco, 20861 Brugherio (Monza e Brianza) (IT)
(74) Representative: Dehns

(57) **Abstract**

There is provided a damper assembly for a helicopter rotor. The damper assembly comprises a piston movable along an axis, a piston shaft connected to and axially movable with the piston along the axis, and a bushing configured to surround the piston shaft and guide the piston shaft for movement along the axis. The bushing comprises a surface configured to oppose the piston shaft and guide the piston shaft for movement along the axis. The piston shaft comprises a surface configured to oppose the surface of the bushing. A clearance is provided between the surface of the piston shaft and the surface of the bushing so as to provide a passage for fluid to flow between the bushing and the piston shaft in use.

## Description

### FIELD

The present disclosure relates generally to a damper assembly, for example for a helicopter rotor assembly, that may be positioned between two rotor blades of the main rotor of a helicopter and has the function of minimising vibration and other movement effects during flight.

### BACKGROUND

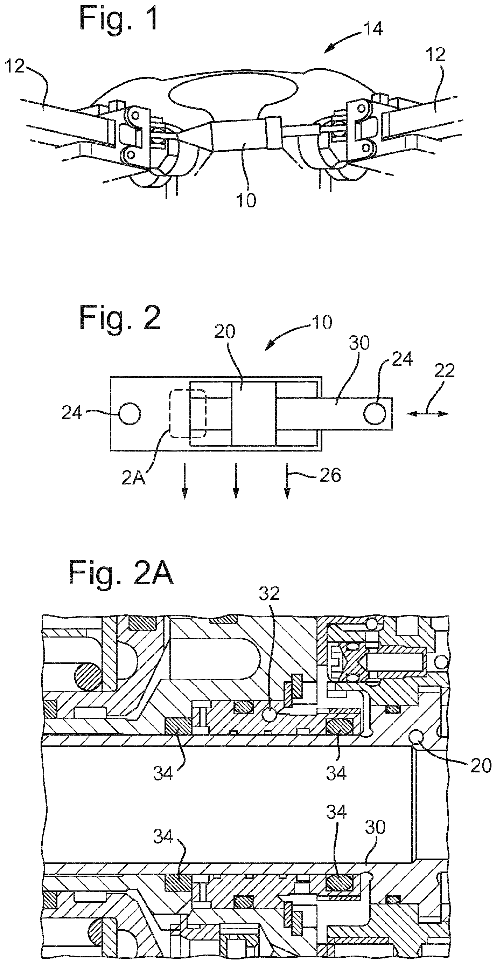

As indicated in Fig. 1 a damper assembly 10 for a helicopter rotor is connected between two rotor blades 12 of the main rotor 14 of a helicopter (not shown). As the blades 12 move around upon rotation of the rotor 14, the damper assembly 10 minimises vibration and other movement effects during flight.

Fig. 2 schematically shows a picture of the damper assembly 10, which includes a piston 20 that moves along an axis A and in an axial direction as shown by arrow 22. The damper assembly further comprises a piston shaft 30 movable with the piston 20 along the axis A.

As is known in the art this movement is dampened such that the damper assembly 10 resists movement in this direction 22 to minimise the aforesaid movement effects. The damper assembly 10 is connected to both rotor blades 12 at locations 24 that are schematically indicated in Fig. 2 at either axial end of the damper assembly 10.

As the damper assembly 10 rotates with the blades 12 the inertial loads in a transverse direction (as indicated by arrow 26) can be very large. Fig. 2A shows a more detailed close-up of the damper assembly 10, showing the piston 20 that is connected to the piston shaft 30 (also shown in Fig. 2) as well as in conventional arrangements a metallic bushing 32.

Conventional designs for the bushing 32 have included a hard material for the bushing 32, for example bronze or other hard metal, which exhibit low coefficients of friction. However, large lateral forces from the inertial loads produced high wear and premature leakage over the life of the damper assembly 10.

Further developments were aimed at increasing the wear resistance of the damper assembly 10 by modifying the material, but these still had some disadvantages. For example, a carbide material used for the piston 20 and piston shaft 30, but although advantageous in some respects this material still exhibited a high surface quality deterioration.

In addition, there remained a large amount of heat generated due to the contact surfaces, and high stress concentrations on the bushing 32. The damper assembly 10 further included seals 34 on either side of the bushing 30 that were designed to be highly efficient at preventing leakage.

What is desired is an improved design of damper that solves the above problems.

### SUMMARY

In accordance with an aspect of this disclosure there is provided a damper assembly for a helicopter rotor. The damper assembly comprises a piston movable along an axis, a piston shaft connected to and axially movable with the piston along the axis, and a bushing configured to surround the piston shaft and guide the piston shaft for movement along the axis. The bushing comprises a surface configured to oppose the piston shaft and guide the piston shaft for movement along the axis. The piston shaft comprises a surface configured to oppose the surface of the bushing. A clearance is provided between the surface of the piston shaft and the surface of the bushing so as to provide a passage for fluid to flow between the bushing and the piston shaft in use.

The above features provide a damper assembly bushing having a beneficial fluid leakage through the passage, which can help ensure improved lubrication and heat removal.

The fluid may be a lubricant.

The damper assembly may form part of a helicopter rotor assembly, and may be positioned between two rotor blades of the main rotor of a helicopter for minimising vibration and other movement effects during flight.

The damper assembly may further comprise one or more passages configured to transport fluid away from the fluid passage between the surface of the piston shaft and the surface of the bushing. This can assist in movement of the fluid through the passage to maximise the heat removal and other effects referred to herein.

The one or more passages may each comprise an inlet located adjacent to and in fluid communication with the fluid passage between the surface of the piston shaft and the surface of the bushing. The inlet may be configured to receive fluid directly from the fluid passage between the surface of the piston shaft and the surface of the bushing. The inlet may be configured to pass fluid into a respective one of the one or more passages

The one or more passages may each comprise an outlet located radially outward of the inlet. The outlet may be configured to receive fluid that has passed through a respective fluid passage and output that fluid, for example to a fluid store or tank, or fluid plenum as described below.

The damper assembly may further comprise a fluid plenum, wherein the outlet of each of the one or more passages is configured to output or expel fluid transported through the passage into the fluid plenum. The fluid plenum may be an annular chamber for holding a quantity of fluid.

The bushing may further comprise one or more seals configured to prevent leakage of fluid from the fluid passage between the surface of the piston shaft and the surface of the bushing. The one or more seals may fluidly seal against the piston shaft. The one or more seals may be located in an axial direction away from both the surface of the bushing and the piston. Locating the seals here (i.e., away from the fluid passage between the surface of the piston shaft and the surface of the bushing can assist in providing the benefits stated herein, whilst minimising loss of fluid.

When combined with the one or more passages configured to transport fluid away from the fluid passage between the surface of the piston shaft and the surface of the bushing, the seals may also be located in an axial direction away from the inlet to those passages. This optimises the arrangement of seals and fluid passages to maximise the benefits stated herein. The bushing may be free of any seals both within the fluid passage between the surface of the piston shaft and the surface of the bushing, and in an axial direction from this fluid passage towards the piston. This is seen as an improvement over provision of seals either side of the bushing (as shown in Fig. 2A), which, in stark contrast, prevent fluid from entering the region between the bushing and the piston shaft.

The one or more seals may comprise a primary seal and a secondary seal, wherein the primary seal is a ring seal. The primary seal may be located axially between the secondary seal and an axial end of the surface of the bushing and may comprise a ring seal with a scraper function for preventing ingress of fluid and other contaminants. This is seen as an optimum arrangement of seals to use with the present disclosure.

In accordance with an aspect of the disclosure, there is provided a helicopter rotor comprising a damper assembly as described above. The damper assembly is seen as particularly (but not exclusively) beneficial in such applications. The helicopter rotor may further comprise at least two rotor blades, wherein the damper assembly is located between the two rotor blades.

The damper assembly may be configured to minimise vibration of the rotor blades during rotation of the rotor blades in flight.

In accordance with an aspect of the disclosure, there is provided a method of operating a damper assembly or a helicopter rotor as described above, the method comprising passing a fluid (e.g., lubricant) through the passage between the bushing and the piston shaft so as to lower friction between the bushing and the piston shaft during operation of the damper assembly.

### BRIEF DESCRIPTION OF THE DRAWINGS

Various embodiments will now be described, by way of example only, and with reference to the accompanying drawings in which:
Fig. 1 shows a damper assembly for a helicopter rotor;
Fig. 2 schematically shows a picture of the damper assembly of Fig. 1, which includes a piston that moves along an axis;
Fig. 3 shows an embodiment of a damper assembly in accordance with the disclosure;
Fig. 3A schematically illustrates a means to resist movement of the piston of Fig. 3 by way of a constriction/orifice located in a fluid path within the assembly;
Fig. 3B illustrates an alternative means to resist movement of the piston of Fig. 3, which includes a constriction/orifice similar to that of Fig. 3A but located within the piston itself;
Fig. 3C illustrates a further alternative means to resist movement of the piston of Fig. 3, which includes two constrictions/orifices located within the assembly; and
Fig. 4 shows the damper assembly of Fig. 3 in more detail and at a specific location.

### DETAILED DESCRIPTION

Herewith will be described various embodiments of a damper assembly that can be used in various applications, and in particular between the rotor blades of a main rotor of a helicopter. The damper assemblies described herein are configured to minimise vibration and other movement effects during operation, for example during rotation of the rotor blades in flight.

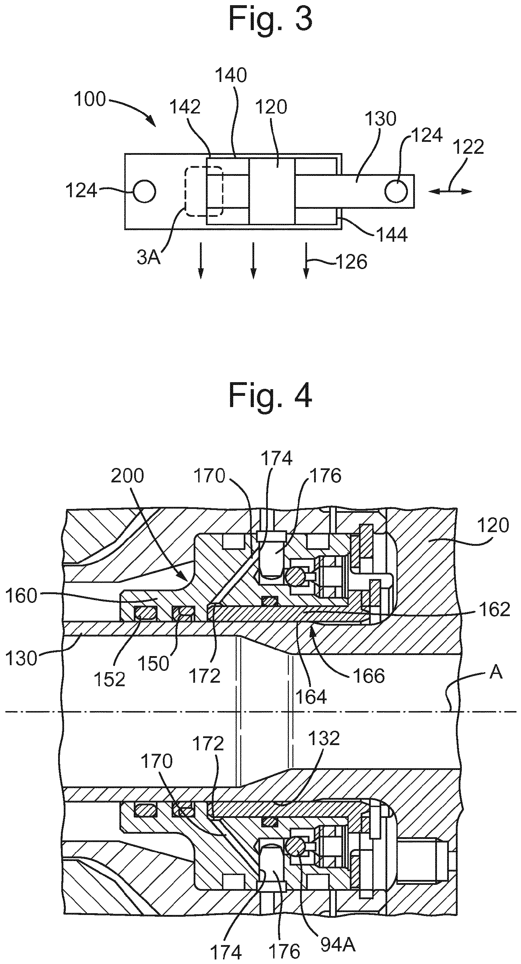

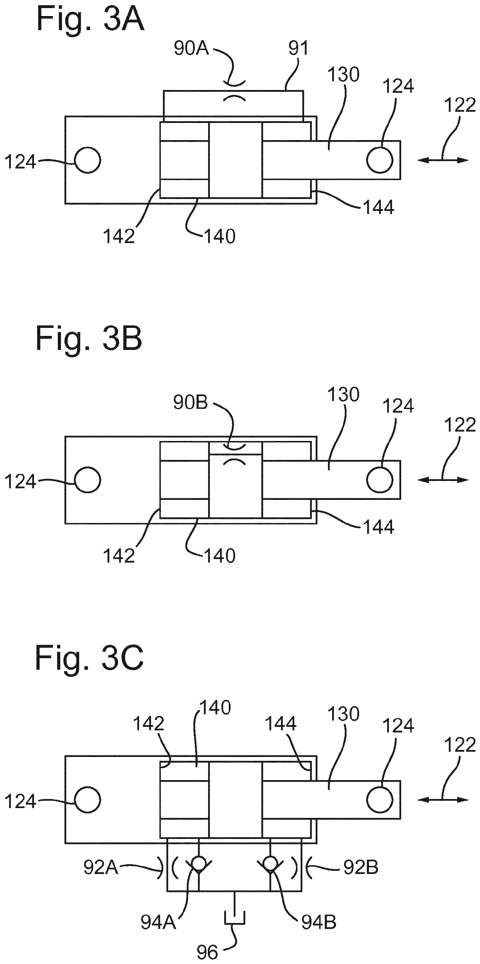

Fig. 3 shows one embodiment of a damper assembly 100 in accordance with the disclosure, which comprises a piston 120 movable along an axis A, as well as a piston shaft 130 movable with the piston 120 along the axis A. The operation of the piston 120 and piston shaft 140 is similar to the same components of the damper assembly 10 shown and described above in respect of Fig. 2. The piston shaft is connected to and axially movable with the piston 120 along the axis A.

The piston 120 moves in an axial direction as shown by arrow 122. As is known in the art this movement is dampened such that the damper assembly 100 resists movement in this direction 122 to minimise the aforesaid movement effects, which may be caused by inertial loads in a transverse direction 126 as described above. The damper assembly 100 may be connected between two rotor blades 12 at locations 124 at either axial end of the damper assembly 100.

The piston 120 moves within a chamber 140 in the axial direction 122 between a first end 142 and a second end 144 of the chamber 140, wherein the damper assembly 100 comprises means to resist movement of the piston 120 within the chamber 140.

Fig. 3A schematically illustrates a means to resist movement of the piston 120 by way of a constriction/orifice 90A, which is fluidly located between the portions of the chamber 140 either side of the piston 120. The constriction/orifice 90A is located in this embodiment along a fluid conduit 91 that fluidly connects one portion of the chamber 140 with the other. As the piston 120 moves in the axial direction (arrow 122) fluid will pass between the two portions (which continuously vary in volume) via the constriction/orifice 90A. This provides a damping effect as described above, although as noted any suitable method could be used as would be known in the art.

Fig. 3B illustrates an alternative means to resist movement of the piston 120, which includes a constriction/orifice 90B that is fluidly located between the portions of the chamber 140 either side of the piston 120, but is located within the piston 120 itself. This would act in the same manner as the constriction/orifice 90A shown and described in respect of Fig. 3A.

Fig. 3C illustrates a further alternative means to resist movement of the piston 120, which includes two constrictions/orifices 92A, 92B in combination with a hydraulic fluid tank 96. A first constriction/orifice 92A is fluidly located between one of the portions of the chamber 140 and the fluid tank 96, and a second constriction/orifice 92B is fluidly located between the other portion of the chamber 140 and the fluid tank 96. A check valve 94A, 94B is associated with each constriction/orifice 92A, 92B, and is fluidly located between the fluid tank 96 and each portion of the chamber 140. In use, hydraulic fluid will flow between the portions of the chamber 140 via one of the constrictions/orifices 92A, 92B and the check valve 94A, 94B associated with the other of the constrictions/orifices 92A, 92B. Hydraulic fluid will be added to the system at an inlet (not shown) and removed via the hydraulic fluid tank 96.

The hydraulic fluid tank 96 typically refers to the part or parts of the damper assembly 100 that store the hydraulic fluid. Such fluid may be gradually lost and may need to be replenished periodically.

Fig. 4 shows the damper assembly 100 in more detail and at a specific location, namely at the first end 142 of the chamber 140. The same features may be used at the second end 144 of the chamber 140.

The damper assembly 100 comprises a bushing 200, which may be formed by a first body 160 and a second body 162. The first body 160 may house the one or more seals 150, 152, and the second body 162 may be located concentrically within the first body 160.

The bushing 200 may comprise one or more seals, for example a primary seal 150 and a secondary seal 152. The primary seal 150 may be a standard ring seal, whilst the secondary seal 152 may comprise a ring seal with a scraper function for preventing ingress of fluid and other contaminants into the chamber 140. In various embodiments a single seal may be provided, or more than two seals.

The bushing 200 is configured to surround the piston shaft 130 and guide the piston shaft 130 for movement along the axis A. The bushing 200 comprises a sliding surface 164 along which the piston shaft 130 slides in use. The surface 164 is configured to oppose the piston shaft 130 and guide the piston shaft 130 for movement along the axis A. In the illustrated embodiment the sliding surface 164 is incorporated on the second body 162. In various embodiments the first body 160 and the second body 162 may be unitary. In accordance with the disclosure, and as described below a fluid 'leakage' is induced across the surface 164 (through passage 166) that beneficially provides a cooling effect.

The sliding surface 164 (either of the second body 162 or a unitary body comprising the first and second bodies 160, 162) may be constructed of a suitable hard and/or stiff material (or may comprise a coating of such material), for example a material having a Vickers hardness of between about 2500 and about 2700 (e.g., about 2600) and/or a Young's modulus of between approximately 500-750 GPa. An example of such a material is a carbide, such as tungsten carbide.

The piston shaft 130 may also comprise a sliding surface 132 that opposes the sliding surface 164 of the bushing 200 and is configured to slide along the sliding surface 164 of the bushing 200 in use. The sliding surface 132 of the piston shaft 130 may be constructed of a suitable hard and/or stiff material (or may comprise a coating of such material), for example a material having a Vickers hardness of between about 2500 and about 2700 (e.g., about 2600) and/or a Young's modulus of between approximately 500-750 GPa. An example of such a material is a carbide, such as tungsten carbide.

The sliding surface 132 of the piston shaft 130 may be constructed of the same material as the sliding surface 164 of the bushing 200.

A clearance is provided between the sliding surfaces 132, 164 of the piston shaft 130 and the bushing 200, respectively. This is in contrast to conventional arrangements which will typically incorporate a sliding friction fit between the opposing surfaces. This provides a beneficial passage 166 for fluid (e.g., lubricant) to flow between the bushing 200 (e.g., the second body 162 thereof) and the piston shaft 130. Due to this clearance and flow of fluid through the passage 166, heat may be removed from the components sliding relative to each other, reducing their working temperature. In addition, a continuous lubricating film may be provided within the passage 166, which lowers friction and improves the sliding capability of the opposing surfaces 132, 164. A further effect is that there is an augmented centring force between the bushing 200 and the piston shaft 130 caused by the film of fluid within the passage 166. This can prevent defamation of the bushing 200, as may be experienced previously if the opposing surfaces have a tight, sliding and/or friction fit.

In combination with the clearance provided between the surface 132 of the piston shaft 130 and the surface 164 of the bushing 200 (which provides the passage 166 for fluid to flow between the bushing 200 and the piston shaft 130), the sliding surfaces provide a metallic coupling that can reduce the wear experienced by either surface in use. That is, there will exist a sealing effect across the bushing 200, which is provided by the two opposed sliding surfaces 132, 164 and a film of fluid in the passage 166 therebetween. This can form an effective barrier for unwanted fluid or particulates to pass across the bushing 200, without the need for, e.g., rubber seals. This is in stark contrast to the embodiment shown in Fig. 2A, for example, which provides seals 34 either side of the bushing to prevent any fluid from entering the region between the bushing and the piston shaft.

As the fluid moves along the passage 166 between the piston shaft 130 and the bushing 200 (e.g., the second body 162 thereof), it will reach the one or more seals 150, 152 and may be prevented from further movement in this direction. The one or more seals may be configured to prevent leakage of fluid from the fluid passage 166 between the surface 132 of the piston shaft 130 and the surface 164 of the bushing 200. For this purposes the one or more seals 150, 152 may be located in an axial direction away from both the surface 164 of the bushing 200 and the piston 120.

In the illustrated arrangement the passage 166 is provided in combination with a primary ring seal 150 and secondary ring seal 152 with a scraper function, which is seen as an optimum arrangement that maximises the ability of the passage to provide the aforementioned effects, whilst adequately preventing leakage from the chamber 140 and sealing the chamber 140 from external contaminants. This is in contrast to the conventional arrangement that provided the bushing sliding surface between two ring seals.

The size of the passage 166 or clearance will naturally depend on the application, although it could be provided as small enough to provide a film (e.g., thin film) of fluid that passes through the passage to provide the effective sealing described above, for example minimising leakage across the bushing 200 whilst ensuring the functionality of the damper (i.e., the damping effect) is maintained.

The bushing 200 further comprises one or more passages 170 (e.g., fluid passages or conduits) configured to remove and circulate fluid (e.g., lubricant) that has travelled along the clearance. The passages may be configured to transport fluid away from the fluid passage 166 between the surface 132 of the piston shaft 130 and the surface 164 of the bushing 200.

Each passage 170 may comprise an inlet 172 located adjacent to and in fluid communication with the fluid passage 166 between the surface 132 of the piston shaft 130 and the surface 164 of the bushing 200. For example, the inlet 172 may be located at the junction between the first body 160 and the second body 162, and may further comprise an outlet 174 located radially away from the second body 162.

The damper assembly 100 may further comprise a fluid plenum 176 for collecting fluid (e.g., lubricant) from the passages 170, before transporting the fluid to a lubricant store or other fluid reservoir. Use of a plenum 176 reduces the chance of fluid becoming blocked in the passages 170. The outlet 174 of each of the one or more passages 170 may be configured to expel fluid transported through each passage 170 into the fluid plenum 176. The fluid plenum 176 may be annular (e.g., extend around the axis A) and may be configured to hold a quantity of fluid. For example, the plenum 176 may be configured to collect the fluid from the passages 170, e.g., before the fluid is transported from the plenum 176 to lubricant store or other fluid reservoir.

Fig. 4 also shows the check valve 94A that is indicated schematically in Fig. 3C.

Generally, the passages 170 may be configured to transport fluid (e.g., lubricant) away from the fluid passage 166 between the surface 132 of the piston shaft 130 and the surface 164 of the bushing 200 (e.g., the region/clearance between the opposing surfaces 132, 164), for example for transporting the fluid to a lubricant store or other fluid reservoir. Any number of passages 170 may be provided, and they may be positioned at any suitable location adjacent to the region/clearance such that they can provide this function.

As described herein, and in contrast to conventional arrangements, leakage through the passage 166 is desirable and is provided using a film of fluid within the passage 166 to ensure lubrication and heat removal.

In refinements (i.e., non-essential features) the bushing 200 may be free of any seals within the passage 166, and/or towards the piston 120 (e.g., axially between the passage 166 and the piston 120). This can assist in providing the necessary fluid leakage through the passage 166 by allowing a flow into and through the passage 166, whilst the seals 150, 152 located axially from the passage 166 (and/or inlet 172) in a direction away from the piston 120 can assist in preventing further movement in this direction and encourage the fluid to pass through the passage 170 for circulation.

Although the present disclosure has been described with reference to various embodiments, it will be understood by those skilled in the art that various changes in form and detail may be made without departing from the scope of the invention as set forth in the accompanying claims.

## Claims

1. A damper assembly (100) for a helicopter rotor, comprising:
a piston (120) movable along an axis (A);
a piston shaft (130) connected to and axially movable with the piston (120) along the axis (A); and
a bushing (200) configured to surround the piston shaft (130) and guide the piston shaft (130) for movement along the axis (A),
wherein the bushing (200) comprises a surface (164) configured to oppose the piston shaft (130) and guide the piston shaft (130) for movement along the axis (A),
wherein the piston shaft (130) comprises a surface (132) configured to oppose the surface (164) of the bushing (200),
wherein a clearance is provided between the surface (132) of the piston shaft (130) and the surface (164) of the bushing (200) so as to provide a passage (166) for fluid to flow between the bushing (200) and the piston shaft (130) in use.

2. A damper assembly as claimed in claim 1, further comprising one or more passages (170) configured to transport fluid away from the fluid passage (166) between the surface (132) of the piston shaft (130) and the surface (164) of the bushing (200).

3. A damper assembly as claimed in claim 2, wherein the one or more passages (170) each comprise an inlet (172) located adjacent to and in fluid communication with the fluid passage (166) between the surface (132) of the piston shaft (130) and the surface (164) of the bushing (200).

4. A damper assembly as claimed in claim 2 or 3, wherein the one or more passages (170) each comprise an outlet (174) located radially outward of the inlet (172).

5. A damper assembly as claimed in claim 4, further comprising a fluid plenum (176), wherein the outlet (174) of each of the one or more passages (170) is configured to expel fluid transported through the passage (170) into the fluid plenum (176).

6. A damper assembly as claimed in claim 5, wherein the fluid plenum (176) is an annular chamber for holding a quantity of fluid.

7. A damper assembly as claimed in any preceding claim, wherein the bushing (200) further comprises one or more seals (150,152) configured to prevent leakage of fluid from the fluid passage (166) between the surface (132) of the piston shaft (130) and the surface (164) of the bushing (200).

8. A damper assembly as claimed in claim 7, wherein the one or more seals (150,152) fluidly seal against the piston shaft (130).

9. A damper assembly as claimed in claim 7 or 8, wherein the one or more seals (150,152) are located in an axial direction away from both the surface (164) of the bushing (200) and the piston (120).

10. A damper assembly as claimed in claim 7, 8 or 9, wherein the one or more seals (150,152) comprise a primary seal (150) and a secondary seal (152), wherein the primary seal (150) is a ring seal, and the primary seal (150) is located axially between the secondary seal (152) and an axial end of the surface (164) of the bushing (200) and comprises a ring seal with a scraper function for preventing ingress of fluid and other contaminants.

11. A damper assembly as claimed in any preceding claim, wherein the fluid is lubricant.

12. A helicopter rotor (14) comprising a damper assembly (100) as claimed in any preceding claim.

13. A helicopter rotor as claimed in claim 12, further comprising at least two rotor blades (12), wherein the damper assembly (100) is located between the two rotor blades (12).

14. A helicopter rotor as claimed in claim 13, wherein the damper assembly (100) is configured to minimise vibration of the rotor blades (12) during rotation of the rotor blades (12) in flight.

15. A method of operating a damper assembly as claimed in any of claims 1-11, or a helicopter rotor as claimed in any of claims 12-14, the method comprising passing a fluid (e.g., lubricant) through the passage (166) between the bushing (200) and the piston shaft (130) so as to lower friction between the bushing (200) and the piston shaft (130) during operation of the damper assembly (100).
